(19) Europäisches Patentamt
European Patent Office
Office européen des brevets

(11) **EP 2 609 355 B1**

(12) **EUROPÄISCHE PATENTSCHRIFT**

(45) Veröffentlichungstag und Bekanntmachung des Hinweises auf die Patenterteilung:
**24.06.2015   Patentblatt 2015/26**

(21) Anmeldenummer: **11839762.9**

(22) Anmeldetag: **26.08.2011**

(51) Int Cl.:
*F16L 21/04* (2006.01)      *F16L 37/05* (2006.01)
*F16L 37/06* (2006.01)      *F16L 37/20* (2006.01)
*B60S 5/04* (2006.01)       *F04B 33/00* (2006.01)
*F16K 15/20* (2006.01)      *B60C 29/06* (2006.01)

(86) Internationale Anmeldenummer:
**PCT/DE2011/075201**

(87) Internationale Veröffentlichungsnummer:
**WO 2012/062297 (18.05.2012 Gazette 2012/20)**

(54) **VENTILKUPPLUNGSVORRICHTUNG**

VALVE COUPLING DEVICE

DISPOSITIF DE RACCORD À UNE VALVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2010   DE 102010035605**

(43) Veröffentlichungstag der Anmeldung:
**03.07.2013   Patentblatt 2013/27**

(73) Patentinhaber: **GL GmbH Metall- und Werkstatttechnik**
**72636 Frickenhausen (DE)**

(72) Erfinder: **HENZLER, Adolf**
**72636 Frickenhausen (DE)**

(74) Vertreter: **Schaich, Axel**
**Adam-Berg-Straße 103**
**81735 München (DE)**

(56) Entgegenhaltungen:
**EP-A1- 1 375 994      US-A- 1 301 508**
**US-A- 4 345 783      US-B1- 6 220 273**

EP 2 609 355 B1

**Beschreibung**

Die Erfindung betrifft eine Ventilkupplungsvorrichtung zur Ankopplung eines Gasvorrats an ein Ventil eines mit dem Gas befüllbaren Gegenstands, und bezieht sich insbesondere auf eine zum Befüllen eines Reifens mit Luft oder Stickstoff auf ein Ventil des Reifens aufsteckbare und mit diesem kuppelnde Vorrichtung.

Zur Befüllung oder zur Korrektur des Luftdrucks von etwa Fahrzeug-reifen kommen mit einem Druckluftvorrat verbundene Reifenfüllgeräte zum Einsatz. Von diesen Reifenfüllgeräten führt in der Regel eine Druckluftleitung, beispielsweise eine Schlauch- oder Rohrleitung, zu einem an einem Reifen angeordneten Reifenventil. Am reifenseitigen Ende der Druckluftleitung ist dabei ein Hebelstecker angeordnet, der einerseits eine luftdichte Verbindung zu dem Reifenventil herstellen soll, und andererseits einen Betätigungsmechanismus zum Bewegen eines Ventilstifts in dem Reifenventil aufweist, welcher in einer Öffnungsstellung einen Strömungskanal durch das Ventil offen hält, und in einer Schließstellung diesen verschließt.

Bekannte Hebelstecker verfügen dazu über einen an einem Steckerkörper außen liegenden Klemmhebel, ein in dem Steckerkörper liegendes elastisches Dichtungselement, und ebenfalls innen liegend einen dem Ventilstift des Reifenventils gegenüber liegenden Druckstift. Zur Herstellung einer Verbindung zwischen dem Hebelstecker und dem Reifenventil wird der Hebelstecker auf das Reifenventil aufgesetzt und durch manuelles Betätigen des Klemmhebels durch einen Benutzer auf diesem fixiert. Während des Fixiervorgangs greift ein mit dem Klemmhebel in Wirkverbindung stehendes Zungenstück in ein sich an dem Reifenventil befindendes Außengewinde ein und sorgt für eine Haltekraft für den weiteren Fixiervorgang. Gleichzeitig wird durch die Betätigung des Klemmhebels das innen liegende Dichtungselement so verformt, dass es das Außengewinde des Ventils fester umschließt, und wird der Ventilstift des Reifenventils durch den Druckstift in eine den Strömungskanal durch das Reifenventil frei gebende Öffnungsstellung bewegt. Nun kann der Reifen mittels einem in der Druckluftleitung angeordneten Handstück und einem darin enthaltenen Ventil aus dem Druckluftvorrat befüllt bzw. belüftet werden, oder kann Luft aus dem Reifen abgelassen bzw. entlüftet werden. Ein solcher Hebelstecker ist aus der EP 1 375 994 A bekannt.

Die bekannte Anordnung weist jedoch den Nachteil auf, dass selbst bei intaktem Hebelstecker die Dichtwirkung zwischen dem Reifenventil und dem elastischen Dichtungselement in der Regel auch bei manueller Unterstützung durch zum Beispiel Verdrehen der Kupplungsvorrichtung bei in Eingriff stehender Zunge, d. h. einem manuellen Verdrehen und damit Festziehen über das Ventilgewinde zur Verbesserung der Dichtwirkung, mangelhaft bleibt und somit bei aufgesetztem Hebelstecker ständig Luft entweichen kann. Zusätzlich entweicht in der Regel bereits während des Aufsteckens und/oder Abziehens des Hebelsteckers eine erhebliche Luftmenge. Dies führt zu einer nur ungenau bestimmbaren Reifenfüllmenge, d. h: der an einer Druckmessvorrichtung an dem Handstück angezeigte Reifenluftdruck stimmt in der Regel nicht mit dem tatsächlichen Reifenluftdruck überein, oder es kann eine gewünschte Reifenfüllmenge nur schwer erzielt werden, wobei sich eine Abweichung mit zunehmendem Verschleiß an dem Gewinde des Reifenventils und/oder an dem Hebelstecker, wie er beispielsweise bei schlecht gewarteten Reifenfüllgeräten an Versorgungsstationen beobachtbar ist, aufgrund einer schlechter oder unmöglich werdenden Abdichtung und Fixierung noch vergrößert.

Andere bekannte Reifenfüllgeräte mit Aufsetzsteckern ohne Klemmhebel, beispielsweise solche nach Art eines Stecknippels für Manometer-Handprüfgeräte oder einer herkömmlichen Luftpumpe für Fahrräder, arbeiten mit dem Unterschied, dass eine Dichtwirkung nur durch eine ständig vom Benutzer aufzuwendende Aufsetz- oder Aufdrückkraft erzielt wird, im Wesentlichen vergleichbar und weisen ebenfalls zumindest die vorstehend erwähnten Nachteile auf.

Die US 4345783 offenbart einen mit externem Fluiddruck betätigten Kupplungsstecker.

Zwar kann die Dichtwirkung zwischen dem Reifenventil und dem Dichtungselement durch manuelles hin und her Bewegen des Steckers oder durch Aufwenden einer hohen manuellen Aufsetz- oder Druckkraft, mit der der Stecker von einem Benutzer auf das Reifenventil gepresst wird, vorübergehend, jedoch nicht dauerhaft, verbessert werden. Zudem ist ein derartiges, zusammen mit der Bedienung und Ablesung des Handstücks beidhändiges Hantieren mit der Reifenfüllvorrichtung bei sich nur wenig über einer Bodenfläche befindenden Reifenventilen oder bei mehreren zu befüllenden Reifen in Anbetracht des erzielbaren Ergebnisses äußerst mühsam. Das nur ungenau erzielbare Ergebnis selbst stellt im Hinblick auf die Einsparung von Kraftstoff, auf eine erwünschte Optimierung des Reifenverschleißes und verlängerte Reifenlebensdauer, sowie nicht zuletzt auf Sicherheitsaspekte und reifenbezogene Vorfälle bei hohen Geschwindigkeiten, wofür ein korrekter Reifenluftdruck Grundvoraussetzung ist, einen weiteren erheblichen Nachteil der bekannten Anordnung dar.

Ausgehend hiervon liegt der Erfindung als eine Aufgabe zugrunde, eine Ventilkupplungsvorrichtung zu schaffen, mit der eine gasdichte Kopplung an ein Ventil eines mit einem Gas befüllbaren Reifens von einem Benutzer leicht herstellbar ist.

Darüber hinaus soll die Erfindung eine Ventilkupplungsvorrichtung bereitstellen, welche während eines Aufsetzvorgangs auf ein Ventil selbsttätig in einen sich während der Benutzung selbst haltenden und gasdichten Aufsetzzustand übergeht.

Schließlich soll die Erfindung eine Ventilkupplungsvorrichtung in Form einer gegenüber bekannten Anordnungen in Bezug auf Dichtwirkung und Sitzvermögen an einem Ventil verbesserten Reifenventil-Kupplungsvorrichtung für einen mit Luft und/oder Stickstoff befüllbaren Reifen bereitstellen.

Diese Aufgabe wird erfindungsgemäß durch eine Ventilkupplungsvorrichtung mit den Merkmalen des Anspruchs 1 gelöst. Vorteilhafte Weiterbildungen der Erfindung sind Gegenstand der beigefügten Unteransprüche.

Der Erfindung liegt damit die allgemeine Idee zugrunde, eine Ventilkupplungsvorrichtung bereitzustellen, bei der in einem auf ein Ventil aufgesetzten Zustand der Vorrichtung durch ein Einschieben eines Hohlkörpers mit einem geringen Kraftaufwand eines Benutzers Fluid in einem Arbeitsraum der Vorrichtung verdrängt wird. Die Verdrängung des Fluidvolumens führt zu einem Druckanstieg in dem Arbeitsraum. Durch den Druckanstieg und eine dadurch auf eine Innenwand des Gehäuses nach oben wirkende erste Kraft verschieben sich das Gehäuse für einen Druckausgleich und ein Körper im Inneren des Gehäuses gegeneinander und vergrößern so das Volumen des Arbeitsraums. Die Verschiebebewegung verkürzt gleichzeitig ein in einem Ventilaufnahmebereich zwischen dem Gehäuse und dem Körper im Inneren des Gehäuses sitzendes Ventilaufnahmeelement und erzeugt dadurch eine Ventilspann- bzw. Ventilklemmkraft auf das in dem Ventilaufnahmebereich aufgenommene Ventil. Zusätzlich erzeugt der Druckanstieg eine nach unten auf die obere Oberfläche eines auf dem Hohlkörper sitzenden Formteils wirkende zweite Kraft. Das Formteil verdrängt während des Einschiebens des Hohlkörpers das sich unter ihm in dem Arbeitsraum befindende Fluid. Dadurch wirkt in einer Endposition des Formteils, in der es auf einer Fläche des Arbeitsraums aufliegt, auf dessen untere Oberfläche kein Druck, so dass das Formteil nach Art einer Saugwirkung, und damit der mit ihm gekoppelte Hohlkörper, durch die zweite Kraft und gegen den auf der anderen Seite des Ventils herrschenden Druck in der Endposition gehalten wird. In diesem Zustand befindet sich die Ventilkupplungsvorrichtung wieder in einem Druck- und Kräftegleichgewicht, die Ventilkupplungsvorrichtung ist sich selbst sicher haltend und dicht auf dem Ventil fixiert, und der Benutzer hat für die Bedienung des Reifenfüllgeräts beide Hände frei und gelangt zu einem exakten Füllergebnis.

Demnach wird erfindungsgemäß eine Ventilkupplungsvorrichtung geschaffen, beinhaltend: ein Gehäuse; einen fluidgefüllten Arbeitsraum in dem Gehäuse; einen Hohlkörper, der in dem Gehäuse in dem Arbeitsraum bewegbar aufgenommen ist und in seinem Inneren einen durch die Ventilkupplungsvorrichtung verlaufenden fluidfreien Strömungskanal für ein Gas bereitstellt; und ein Haltekraft-Erzeugungselement, welches in Wirkverbindung mit dem Hohlkörper in dem Arbeitsraum angeordnet ist, wobei der Hohlkörper bei einer Bewegung aus einer ersten Lage in eine zweite Lage in dem Arbeitsraum über das Fluid eine auf eine Wandung des Gehäuses wirkende erste Kraft in einer ersten Richtung erzeugt; das Gehäuse aus der ersten Kraft an einem Ventilaufnahmeelement eine Ventilspannkraft erzeugt, und mit Erreichen der zweiten Lage das Haltekraft-Erzeugungselement in dem Arbeitsraum eine zweite Kraft in einer zweiten Richtung erzeugt, die den Hohlkörper und das Haltekraft-Erzeugungselement in der zweiten Lage hält.

In einer bevorzugten Ausgestaltung ist in der Ventilkupplungsvorrichtung ein in dem Gehäuse beweglich angeordnetes Einsatzstück angeordnet, das eine Ausnehmung aufweist, die mit einer inneren Wandung des Gehäuses den Arbeitsraum höhen- und volumenvariabel ausformt, und auf das ebenfalls die erste Kraft wirkt.

Das beweglich bzw. schwimmend in dem Gehäuse aufgenommene Einsatzstück begünstigt vorteilhaft rasche Druckausgleichs- und Krafterzeugungsvorgänge an der Vorrichtung, da es an einem stirnseitigen Umfang eines Ventils ortsfest aufliegt und damit eine Stützkraft für ein schnelles Erreichen einer Gleichgewichtslage bereitstellt.

In einer bevorzugten Ausführungsform weist das Gehäuse zumindest einen ersten Gehäuseabschnitt und einen zweiten Gehäuseabschnitt auf, wobei ein unterer Abschnitt des ersten Gehäuseabschnitts ein erstes Außen- oder Innengewinde aufweist und ein oberer Abschnitt des zweiten Gehäuseabschnitts ein zu dem ersten Gewinde korrespondierendes Innen- oder Außengewinde aufweist, und mittels den Gewinden der erste und der zweite Gehäuseabschnitt auf einer variablen Eingrifflänge miteinander verschraubbar sind.

Die separaten Gehäuseteile ermöglicht eine einfache und kostengünstige Herstellung und Montage, und ermöglicht durch einfache Handbewegungen bzw. Drehbewegungen erforderlichenfalls eine jederzeit nachstellbare Grundeinstellung der Vorrichtung, die eine ordnungsmäßige Weiterbenutzung beispielsweise auch bei beginnendem Verschleiß des Ventilaufnahmeelements bis zum Austausch desselben erlaubt.

Bevorzugt ist der Arbeitsraum gasfrei mit einem nicht komprimierbaren, inkompressiblen Fluid befüllt, und ist hierzu das Fluid ein Hydrauliköl, ein Getriebeöl, oder ein Glykolgemisch auf Wasserbasis.

Die gasfreie Befüllung erlaubt vorteilhaft eine unmittelbare und effizienteste Übertragung der auftretenden Kräfte und Drücke auf die beteiligten Elemente der Vorrichtung und sorgt für kürzestmögliche Hubbewegungen in der Vorrichtung während des Fixiervorgangs an einem Ventil. Gleichzeitig stellt das Fluid so eine Schmier- und Korrosionsschutzwirkung für die Vorrichtung bereit und trägt zur Erhaltung der Elastizität benetzter elastischer Teile bei.

Weiter bevorzugt hat der Hohlkörper ein erstes Ende, an dem ein Schlauchanschlussstück für einen gas- und druckdichten Anschluss einer Gaszufuhrleitung angeordnet ist, ein zweites Ende, an dem eine Druckfläche zum Betätigen eines Ventilstifts eines an dem Ventilaufnahmeelement aufnehmbaren Ventils angeordnet ist, und zwischen dem ersten und dem zweiten Ende einen ersten Abschnitt einer ersten Länge und eines ersten Durchmessers, einen zweiten Abschnitt einer zweiten Länge und eines zweiten Durchmessers, der kleiner ist als der erste Durchmesser; und einen dritten Abschnitt einer dritten Länge und eines dritten Durchmessers, der kleiner ist als der erste Durchmesser und größer ist als der zweite Durchmesser, wobei der zweite Abschnitt eine Aufnahme für das Haltekraft-Erzeugungselement an dem Hohlkörper bildet, der erste Abschnitt in einer wirksamen Länge so bemessen ist, dass das Haltekraft-Erzeugungselement in der ersten Lage gegen eine obere Wandung des Arbeitsraums anlegbar ist und in der zweiten Lage gegen eine untere Wandung des Arbeitsraums anlegbar ist, und der dritte Abschnitt in einer wirksamen Länge so bemessen ist, dass in der zweiten Lage die Druckfläche den Ventilstift zum Öffnen und/oder Schließen des Strömungskanals betätigt.

Der Hohlkörper arbeitet somit vorteilhaft als steuernder Druckkolben, welcher gleichzeitig die Gasdurchleitung durch die Vorrichtung leistet, und ist als solcher einstückig einfach und kostengünstig herstellbar.

Zur Abdichtung des fluidgefüllten Arbeitsraums sind bevorzugt ein erstes Dichtmittel, ein zweites Dichtmittel und ein drittes Dichtmittel vorgesehen, wobei das erste Dichtmittel in einer Ausnehmung in einer oberen Wandung des Gehäuses angeordnet ist und den Arbeitsraum an einem ersten Abschnitt des Hohlkörpers gegen die Außenseite der Ventilkupplungsvorrichtung abdichtet, das zweite Dichtmittel in einer Ausnehmung an einer inneren Wandung eines Einsatzstücks in dem Gehäuse angeordnet ist und den Arbeitsraum an einem dritten Abschnitt des Hohlkörpers gegen die Außenseite der Ventilkupplungsvorrichtung abdichtet, und das dritte Dichtmittel in einem Wandungsabschnitt des Einsatzstücks angeordnet ist und den Arbeitsraum an einer Innenwandung des Gehäuses gegen die Außenseite der Ventilkupplungsvorrichtung abdichtet.

Die Dichtmittel in Form von beispielsweise O-Ringen aus Gummi oder einem Material mit vergleichbaren Eigenschaften sorgen vorteilhaft an lediglich wenigen, einfach zugänglichen Stellen für eine sichere Abdichtung des fluidgefüllten Arbeitsraums nach außen bei gleichzeitig guten Gleiteigenschaften bei auftretenden Verschiebebewegungen, wodurch die Wartungsfreiheit der Vorrichtung stark begünstigt wird.

Bevorzugt ist durch zumindest eine gas- und fluiddicht verschließbare Öffnung in einer oberen Wandung des Gehäuses der Arbeitsraum befüllbar, entleerbar und/oder entlüftbar.

Vorteilhaft ist hierbei, dass der Arbeitsraum nur von einer Seite der Vorrichtung aus zugänglich ist, und dadurch eine zweckmäßige Befüllung, Entleerung, Entlüftung oder Spülung des Arbeitsraums sowie ein umweltfreundliches Auffangen austretenden Fluids beispielsweise mittels einer einfach herzustellenden Adaptereinrichtung leicht möglich ist.

Der durch die Ausformung gebildete Anschlag innerhalb der Vorrichtung verhindert vorteilhaft eine mögliche Fehlbedienung oder ein ungewolltes Auseinanderfallen der Vorrichtung auch bei hohen auftretenden Kräften und Drücken, solange deren Gehäuse von einem Benutzer nicht bewusst geöffnet wird.

Außerdem bevorzugt ist das Ventilaufnahmeelement ein elastisches ringförmiges Element, zwischen einer unteren Außenfläche eines Einsatzstücks und einer unteren, eine Öffnung entsprechend der Ringform des Ventilaufnahmeelements aufweisende Innenfläche des Gehäuses angeordnet, und zur Erzeugung der Ventilspannkraft vermittels einer Verschiebebewegung des Einsatzstücks und des Gehäuses gegeneinander in seiner Längenrichtung komprimierbar.

Diese Lösung trennt vorteilhaft den externen Ventilaufnahmebereich von dem Kraft erzeugenden internen Bereich der Vorrichtung und ermöglicht eine einfache Zugänglichkeit und einen einfachen und raschen Austausch des ein Verschleißteil bildenden Ventilaufnahmeelements mit unmittelbarer Grundeinstellungsmöglichkeit, ohne dass danach die Vorrichtung an anderer Stelle nachjustiert zu werden braucht. Die Vorrichtung ist damit bis auf das Ventilaufnahmeelement wartungsfrei und nach einem Wechsel des Ventilaufnahmeelements sofort wieder einsatzbereit.

Besonders bevorzugt ist das Haltekraft-Erzeugungselement ein ringförmiger Körper, der einen elastischen Lippenbereich und einen Festbereich aufweist, wobei der Lippenbereich eine zu einer Bodenfläche des Arbeitsraums gerichtete Tellerform hat derart, dass in der zweiten Lage der Lippenbereich für ein planes und unterhalb fluidfreies Aufliegen des Haltekraft-Erzeugungselements auf der Bodenfläche des Arbeitsraums elastisch verformbar ist.

Der explizite Vorteil eines solchen Haltekraftelements besteht darin, dass durch die Ausnutzung seiner Membran- oder Saugnapfwirkung in dem Arbeitsraum die Klemm- und Haltekraftverteilung der Vorrichtung derart ausgewogen begünstigt wird, dass bei den Auslegungsdrücken und -Kräften, für welche die Vorrichtung ausgelegt wird, ein optimales Verhältnis zwischen der an dem Ventil erreichten Klemm- oder Spannkraft und der an dem Hohlelement erreichten Haltekraft zum Offenhalten des Strömungskanals erzielt wird.

Die Erfindung wird nachstehend anhand eines bevorzugten Ausführungsbeispiels unter Bezugnahme auf die Zeichnung näher beschrieben. Es zeigen:

Fig. 1 in einer vereinfachten Schnittansicht einer Ventilkupplungsvorrichtung gemäß einem Ausführungsbeispiel wesentliche Elemente des mechanischen Aufbaus derselben in einem auf ein Reifenventil aufgesetzten ersten, noch nicht aktiven Zustand;

Fig. 2 eine vereinfachte Schnittansicht der Ventilkupplungsvorrichtung nach Fig. 1 in einem zweiten, aktiven Zustand;

Fig. 3 eine vereinzelte Schnittansicht eines als Druckkolben arbeitenden Hohlkörpers in der Ventilkupplungsvorrichtung gemäß dem Ausführungsbeispiel;

Fig. 4 eine vereinzelte Schnittansicht eines Haltekraft-Erzeugungselements der Ventilkupplungsvorrichtung gemäß dem Ausführungsbeispiel; und

Fig. 5 eine teilweise Schnittansicht eines Arbeitsraums und eines Ventilaufnahmebereichs der Ventilkupplungsvorrichtung gemäß dem Ausführungsbeispiel, welche wirksame Flächen und Kräfte innerhalb der Ventilkupplungsvorrichtung veranschaulicht.

Bezogen auf die Axial- bzw. Längsrichtung der Ventilkupplungsvorrichtung werden in der nachfolgenden Beschreibung mit "oben" eine Seite und eine Richtung bezeichnet, die einer in den Figuren am oberen Zeichnungsrand angeordneten Luftzufuhrseite zugeordnet ist, und werden mit "unten" eine Seite und eine Richtung bezeichnet, die einer in den Figuren am unteren Zeichnungsrand angeordneten Ventilaufnahmeseite zugeordnet ist. Eine Bewegung beweglicher Teile der Ventilkupplungsvorrichtung erfolgt im Wesentlichen entlang der Längsrichtung. Obwohl ein rotatorischer Freiheitsgrad vorhanden sein kann, zeigt eine rotatorische Bewegung solcher Teile in funktioneller Hinsicht keinen nennenswerten Einfluss.

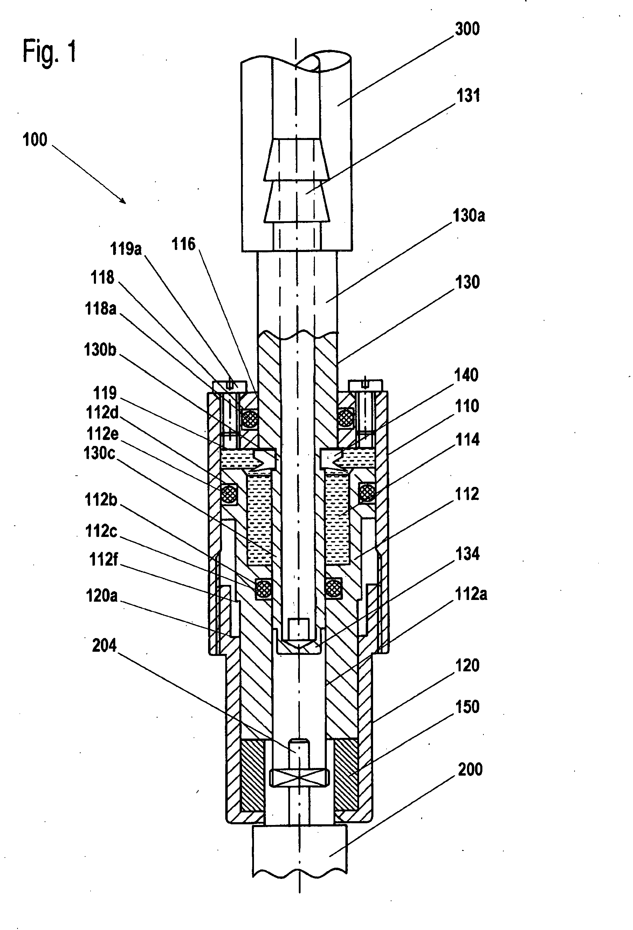

Fig. 1 zeigt in einer vereinfachten Schnittansicht wesentliche Elemente des Aufbaus einer insgesamt mit 100 bezeichneten Ventilkupplungsvorrichtung gemäß einem Ausführungsbeispiel in einem auf ein Reifenventil 200 aufgesetzten, noch nicht aktiven Zustand. Das Reifenventil 200 kann sich hierbei beispielsweise an einer Reifen-/Felgen-Radkombination eines Fahrzeugs oder Geräts wie etwa einer Maschine befinden.

Die Ventilkupplungsvorrichtung 100 ist in ihrem Querschnitt und an ihrem Außenumfang bevorzugt rundförmig ausgestaltet, da eine Rundform eine zweckmäßige und kostengünstige Herstellung einzelner Teile derselben aus einem Kunststoff und/oder einem Metall bzw. einer Metallverbindung als beispielsweise rundförmige Guss- und/oder Drehteile, eine einfache Montage und Demontage sowie einen einfachen Austausch solcher Teile, und mit im Hinblick auf den Verwendungsort geringstmöglichen Maßen gleichzeitig ein kleines Volumen und eine günstige Griffform zur sicheren Handhabung bereitstellt.

Weil beispielsweise die Ventilkupplungsvorrichtung 100 keine aus der Rundform heraus ragenden Bedienelemente aufweist, wie etwa einen erreichbar und betätigbar zu haltenden Hebel, auf dessen Lage zu achten wäre, lässt sich die Ventilkupplungsvorrichtung 100 sehr einfach und schnell auf ein Ventil aufsetzen und ist danach unmittelbar betriebsbereit. Das Fehlen solcher aus der Rundform heraus ragender Elemente verringert zudem die Gefahr von Störungen durch mechanische Beeinträchtigungen wie etwa Verbiegen, Abbrechen, Abfallen, Ausleiern, Verklemmen, und dergleichen. Die sich aus der Rundform ergebenden Symmetrieeigenschaften führen gleichzeitig zu einer vorteilhaften Selbstzentrierung der einzelnen Teile und Abschnitte, sodass die Ventilkupplungsvorrichtung 100 auch dadurch unempfindlich gegenüber Stößen und Bedienungsfehlern ist. Die Rundform bietet darüber hinaus auch eine hervorragende Festigkeit bei beispielsweise einem Überfahren.

Die Ventilkupplungsvorrichtung 100 weist zunächst einen ersten, oberen Gehäuseabschnitt 110, einen zweiten, unteren Gehäuseabschnitt 120, einen Hohlkörper 130, ein Einsatzstück 112, ein Ventilaufnahmeelement 150, und ein Haltekraft-Erzeugungselement 140 auf.

Der erste, obere Gehäuseabschnitt 110 ist in der in der Nähe eines Anschlussabschnitts für eine Schlauchleitung 300 an einem oberen Ende der Ventilkupplungsvorrichtung 100 angeordnet. Der zweite, untere Gehäuseabschnitt 120 ist an einem dem Reifenventil 200 zugewandten unteren Ende der Ventilkupplungsvorrichtung 100 angeordnet. Der als Druckkolben arbeitende und nach Art einer Hohlstange ausgeführte, hohlzylinder- bzw. im Querschnitt rundförmige Hohlkörper 130 ist im Inneren des ersten und des zweiten Gehäuseabschnitts 110, 120 angeordnet und gegenüber dem ersten und dem zweiten Gehäuseabschnitt 110, 120 in der Axialrichtung bezogen auf die Längsachse der Ventilkupplungsvorrichtung 100 nach oben und nach unten beweglich.

Wie in Fig. 1 gezeigt ist, besitzt der Hohlkörper 130 an einem ersten Ende einen an sich bekannten rundförmigen Rohrabschnitt 131 nach Art eines herkömmlichen Schlauchanschlussstücks, an welchem die über ein (nicht gezeigtes) Handstück zu einem (nicht gezeigten) Druckluftvorrat führende Schlauchleitung 300 in üblicher Weise druckdicht anschließbar ist.

Der Hohlkörper 130 weist ferner von seinem ersten Ende weg und zu einem zweiten Ende hin verlaufend einen ersten Abschnitt 130a eines ersten Durchmessers bzw. einer ersten Länge, beispielsweise 8 mm bzw. 20 mm, einen eine Ausnehmung nach Art eines Einstichs in dem Hohlkörper 130 bildenden zweiten Abschnitt 130b eines zweiten, gegenüber dem ersten Durchmesser kleineren Durchmessers bzw. einer zweiten, gegenüber der ersten Länge kleineren Länge, beispielsweise 5,4 mm bzw. 3 mm, und einen dritten Abschnitt 130c eines dritten, gegenüber dem ersten Durchmesser kleineren und gegenüber dem zweiten Durchmesser größeren Durchmessers bzw. einer dritten, gegenüber der zweiten Länge größeren Länge, beispielsweise 6 mm bzw. 20 mm auf.

Der zweite Abschnitt 130b bildet einen Sitz bzw. Lagersitz für ein noch zu beschreibendes Haltekraft-Erzeugungselement 140, und ein das zweite Ende des Hohlkörpers 130 bildender Teil des dritten Abschnitts 130c ist in Form eines zumindest teilflächig ausgeformten Druckstifts 134 ausgeführt, der einem Ventilstift 204 des Reifenventils 200 gegenüber liegt und dazu dient, bei einem Aufsetzen der Ventilkupplungsvorrichtung 100 auf das Ventil 200 den Ventilstift 204 niederzudrücken und bei einem Abziehen der Ventilkupplungsvorrichtung 100 den Ventilstift 204 zu entlasten, und dadurch den Luftkanal von der Schlauchleitung 300 durch den Hohlkörper 130 und das Reifenventil 200 in den (nicht gezeigten) Reifen zu öffnen bzw. zu schließen.

Der erste Gehäuseabschnitt 110 ist becherförmig bzw. im Vertikalschnitt näherungsweise U-förmig mit einem Außendurchmesser von beispielsweise 20 mm und einer Länge von beispielsweise 30 mm ausgestaltet. Das Einsatzstück 112 ist in dem ersten Gehäuseabschnitt 110 diesem gegenüber in der Axialrichtung beweglich angeordnet und bildet mit dem ersten Gehäuseabschnitt 110 einen im Vertikalschnitt näherungsweise T-förmigen Fluid- bzw. Arbeitsraum 114.

An einer oberen Stirnseite des ersten Gehäuseabschnitts 110 ist eine Durchbohrung 116 entsprechend dem Außendurchmesser des Hohlkörpers 130 ausgeformt, in welcher der erste Abschnitt 130a des Hohlkörpers 130 in der Axialrichtung gegenüber dem ersten Gehäuseabschnitt 110 beweglich gelagert aufgenommen ist. Ferner ist in der oberen Stirnseite an einem Umfang der Durchbohrung 116 umlaufend eine geeignet dimensionierte erste Ausnehmung bzw. Nut 118 erzeugt, in welcher ein geeignet dimensionierter erster O-Ring 118a, beispielsweise ein O-Ring eines Durchmessers von 8 mm und einer Stärke von 2 mm, so gelagert ist, dass er den Arbeitsraum 114 an dem Schaft des Hohlkörpers 130, d. h. dem ersten Abschnitt 130a, zur Außenseite der Ventilkupplungsvorrichtung 100 hin abdichtet.

Der Arbeitsraum 114 ist gasfrei mit einem nicht komprimierbaren Fluid, beispielsweise einer geeigneten Hydraulik- oder Getriebeflüssigkeit wie etwa einem Öl oder einem Gemisch auf Glykolbasis, befüllt und hat aufgrund der Beweglichkeit des Einsatzstücks 112 und des Gehäuses 110, 120 gegeneinander ein variables Volumen. Ein Befüllen, Entleeren oder Nachfüllen des Fluids in dem Arbeitsraum 114 sowie ein Entlüften des Arbeitsraums 114 ist über zumindest eine an der Stirnseite in dem ersten Gehäuseabschnitt 110 vorgesehene Öffnung 119, die jeweils mit einem geeigneten, herausnehmbaren Verschlusselement 119a verschließbar ist, möglich. In dem bevorzugten Ausführungsbeispiel werden als Öffnungen 119 und Verschlusselemente 119a beispielsweise zwei Gewindebohrungen mit je einer dazu passenden Schraube M2 x 5 in Verbindung mit einer geeigneten Abdichtung und/oder Schraubensicherung verwendet.

Das Einsatzstück 112 mit einem Teil des Arbeitsraums 114 bildet einen in der Axialrichtung der Ventilkupplungsvorrichtung 100 rohrförmigen Profilkörper, welcher an dem unteren Ende des Arbeitsraums 114 eine Durchbohrung 112a entsprechend dem Außendurchmesser des dritten Abschnitts 130c des Hohlkörpers 130 aufweist. Die Durchbohrung 112a nimmt an ihrer Position den dritten Abschnitt 130c des Hohlkörpers 130 verschieblich und lagernd auf. Entlang der Längsrichtung der Durchbohrung 112a ist eine weitere, geeignet dimensionierte und positionierte umlaufende Ausnehmung bzw. Nut 112b erzeugt, in welcher ein geeignet dimensionierter zweiter O-Ring 112c, beispielsweise ein O-Ring eines Durchmessers von 6 mm und einer Stärke von 2 mm, so gelagert ist, dass er den Arbeitsraum 114 an dem Schaft des Hohlkörpers 130 zur Außenseite der Ventilkupplungsvorrichtung 100 hin abdichtet. Ferner ist an einer Außenseite des Einsatzstücks 112 dessen Wandung gabelförmig und eine Nut bildend derart ausgeformt, dass eine geeignet dimensionierte dritte umlaufende Ausnehmung bzw. Nut 112d erzeugt ist, die einen geeignet dimensionierten dritten O-Ring 112e, beispielsweise einen O-Ring eines Durchmessers von 13 mm und einer Stärke von 2 mm, aufnimmt, welcher den Arbeitsraum 114 an der Gleitfläche zwischen dem Einsatzstück 112 und der Innenwand des ersten Gehäuseabschnitts 110 zur Außenseite der Ventilkupplungsvorrichtung 100 abdichtet.

Der ebenfalls becherförmig bzw. im Vertikalschnitt näherungsweise U-förmig ausgeformte zweite Gehäuseabschnitt 120 mit einem Außendurchmesser von etwa 16 mm weist an seinem dem ersten Gehäuseabschnitt 110 zugewandten oberen Ende ein Außengewinde auf, beispielsweise ein Gewinde M18 oder Feingewinde, über welches er in einem Überlappungsbereich der beiden Gehäuseabschnitte mit einem entsprechenden Innengewinde an der Innenseite des ersten Gehäuseabschnitts 110 mit einer innerhalb einem vorbestimmten Bereich variablen Einschraubtiefe in den ersten Gehäuseabschnitt 110 einschraubbar ist. An seinem dem Reifenventil 200 zugewandten unteren Ende nimmt der zweite Gehäuseabschnitt 120 ein ringförmiges Ventilaufnahmeelement oder elastisches Element 150 beispielsweise aus Gummi oder einem Material mit ähnlichen Eigenschaften auf. Das Ventilaufnahmeelement 150 liegt zum einen auf der inneren Bodenfläche des unteren Endes des zweiten Gehäuseabschnitts 120 und zum Anderen an einer unteren Stirnseite des Einsatzstücks 112 auf. Sein Innendurchmesser ist entsprechend dem Außendurchmesser des Reifenventils 200 derart, dass bei einem Aufsetzen der Ventilkupplungsvorrichtung 100 das Reifenventil 200 durch eine Öffnung an dem unteren Ende des zweiten Gehäuseabschnitts 120 hindurchtritt und in das Ventilaufnahmeelement 150 hinein gleitet, und dabei von diesem abdichtend umschlossen wird.

Der zweite Gehäuseabschnitt 120 kann ferner an seinem Innendurchmesser einen Stufenabschnitt 120a aufweisen, der zu einer entsprechenden Ausformung 112f andernorts an dem Außendurchmesser des Einsatzstücks 112 korrespondiert. Durch geeignete Ausformung entsprechender Wandungsabschnitte in Gehäuse und Einsatzstück in diesem Bereich kann ein materialgerecht und materialsparend veränderlich auslegbarer Verschiebe- und Stellraum erzielt werden, der gleichzeitig eine sichere Handhabung und Funktion der Ventilkupplungsvorrichtung 100 gewährleistet.

Eine Vorspannung zur Einstellung, d. h. Erhöhung oder Verringerung, einer Grunddichtwirkung des Ventilaufnahmeelements 150 gegenüber dem Reifenventil 200 kann durch Variieren der Einschraubtiefe des zweiten Gehäuseabschnitts 120 in den ersten Gehäuseabschnitt 110 erhalten werden, wodurch die Auflagekräfte des Ventilaufnahmeelements 150 gegen die innere untere Bodenfläche des zweiten Gehäuseabschnitts 120 und die untere Stirnseite des Einsatzstücks 112 veränderbar sind und eine elastisch konvexe Ausformung der inneren, gegen die Außenseite des Reifenventils 200 zur Anlage kommenden Oberfläche des Ventilaufnahmeelements 150 veränderlich erzielbar ist.

Aufgrund der Verschraubbarkeit des ersten Gehäuseabschnitts 110 und des zweiten Gehäuseabschnitts 120 ist somit nicht nur das üblicherweise ein Verschleißteil darstellende Ventilaufnahmeelement 150 durch ledigliches Lösen der Verschraubung der beiden Gehäuseabschnitte 110, 120 und Abnehmen des zweiten Gehäuseabschnitts 120 leicht austauschbar, sondern sind darüber sämtliche innen liegende Elemente der gesamten Ventilkupplungsvorrichtung 100 sowohl zu Montage- als auch zu gegebenenfalls Reparaturzwecken gut zugänglich. Auch nach einem Lösen der Verschraubung und Entfernen des zweiten Gehäuseabschnitts 120 bei betriebsbereiter Ventilkupplungsvorrichtung 100 für etwa einen Austausch des Ventilaufnahmeelements 150 gleitet das Einsatzstück 112 auch bei befülltem Arbeitsraum 114 nicht aus der Ventilkupplungsvorrichtung 100 heraus, da der dann auf die untere Stirnfläche des Einsatzstücks 112 wirkende atmosphärische Druck ausreicht, um es sicher an Ort und Stelle zu halten. Gleichfalls dringt daher auch keinerlei Außenluft in den mittels der O-Ringe 112c, 112e und 118a abgedichteten Arbeitsraum 114 ein, und ist daher eine Korrektur der Befüllung des Arbeitsraums 114 nicht erforderlich. Die Ventilkupplungsvorrichtung ist damit bis auf das Ventilaufnahmeelement 150 wartungsfrei.

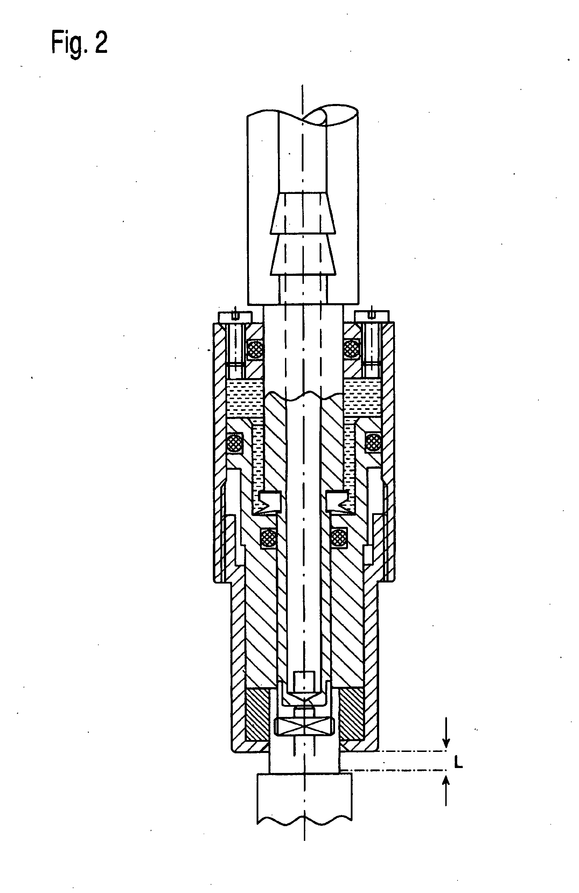

Während Fig. 1 der den Druckkolben der Ventilkupplungsvorrichtung 100 bildende Hohlkörper 130 in einer ersten, gezogenen Stellung oder Arbeitsstellung zeigt, die einem nicht aktiven Zustand der Ventilkupplungsvorrichtung 100 entspricht und in der das Haltekraft-Erzeugungselement 140 in einer oberen Position gegen die Innenwand der Stirnseite des ersten Gehäuseabschnitts 110, d. h. die obere Begrenzungsfläche des T-förmigen Arbeitsraums 114, anliegt, zeigt Fig. 2 in einer vereinfachten Schnittansicht die Ventilkupplungsvorrichtung nach Fig. 1 in einem aktiven Zustand, in dem die Ventilkupplungsvorrichtung 100 auf das Reifenventil 200 aufgesetzt ist, sich der Hohlkörper 130 in einer zweiten, gedrückten Stellung oder Arbeitsstellung nahe einer Endposition befindet, und das Haltekraft-Erzeugungselement 140 in einer unteren Position gegen die Bodenfläche des Arbeitsraums 114 in dem Einsatzstück 112 anliegt. Die tatsächliche Endposition in der zweiten Stellung ist erreicht, wenn das Haltekraft-Erzeugungselement 140 plan auf der Bodenfläche des Arbeitsraums 114 aufliegt.

Darüber hinaus zeigt der in Fig. 2 dargestellte aktive Zustand einen gegenüber der Fig. 1 vergrößerten T-förmigen Arbeitsraum 114. Die Vergrößerung des Arbeitsraums 114 beruht auf einer während des Übergangs aus dem nicht aktiven Zustand in den aktiven Zustand erfolgenden Abwärtsbewegung des Hohlkörpers 130 bis zur Auflage des Haltekraft-Erzeugungselements 140 auf der unteren Bodenfläche des Arbeitsraums 114 durch die Einwirkung einer manuellen Betätigungs- oder Druckkraft von außen, und resultiert aus einer Verdrängung des dem in den Arbeitsraum 114 eintauchenden Hohlkörper 130 entsprechenden, nicht komprimierbaren Fluidvolumens, welche zu einer Ausgleichsbewegung bzw. Druckausgleichsbewegung der miteinander verbundenen ersten und zweiten Gehäuseabschnitte 110, 120 nach oben und/oder des Einsatzstücks 112 nach unten führt. In dem vorliegenden Ausführungsbeispiel beträgt bis zur Herstellung eines Kraft- und Druckgleichgewichts an der Ventilkupplungsvorrichtung 100 die Außenweglänge, d. h. an der Außenseite der Ventilkupplungsvorrichtung 100 wahrnehmbare Verschiebung, dieser Ausgleichsbewegung etwa 1,5 mm.

Die vorgenannte Ausgleichsbewegung führt gleichzeitig zu einer Kompression des Ventilaufnahmeelements 150 derart, dass zum Einen das Reifenventil 200 von dem elastischen Ventilaufnahmeelement 150 luftdichter als bereits durch die Grunddichtwirkung in dem nicht aktiven Zustand umschlossen wird, und zum Anderen von dem Ventilaufnahmeelement 150 eine ausreichend große, seitlich auf den Außenumfang des Reifenventils 200 wirkende Druckkraft derart ausgeübt wird, dass sich die Ventilkupplungsvorrichtung 100 in dem aktiven Zustand auch bei hohem Reifen- oder Fülldruck selbst auf dem Reifenventil 200 hält.

Die Ausgleichsbewegung der miteinander verbundenen ersten und zweiten Gehäuseabschnitte 110, 120 ist in Fig. 2 weiter anhand gegenüber der Fig. 1 veränderten Abständen von Außenteilen, in Fig. 2 beispielhaft als ein Weg oder Hub L an der Unterseite des zweiten Gehäuseabschnitts 120 veranschaulicht und später näher beschrieben, dargestellt. Die übrigen Elemente und Ausgestaltungen der in Fig. 2 gezeigten Ventilkupplungsvorrichtung 100 sind gleich denjenigen der in Fig. 1 dargestellten Elemente und Ausgestaltungen, so dass eine nochmalige Bezeichnung mit Bezugszeichen und Beschreibung derselben weggelassen wird.

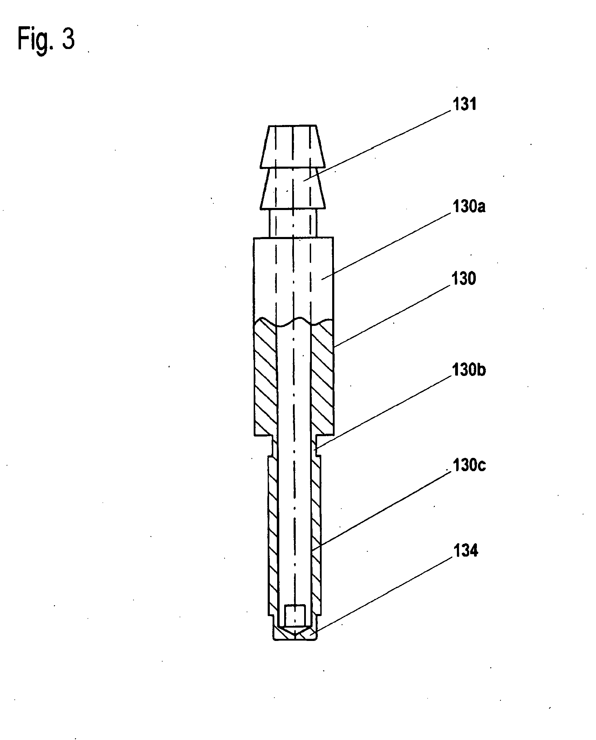

Fig. 3 zeigt verdeutlichend eine vereinzelte Schnittansicht des Hohlkörpers 130 in der Ventilkupplungsvorrichtung 100 gemäß dem Ausführungsbeispiel. Die einzelnen Abschnitte des Hohlkörpers 130 entsprechen hierbei den vorstehend in Verbindung mit den Fig. 1 und 2 beschriebenen, so dass eine nochmalige Beschreibung derselben weggelassen wird.

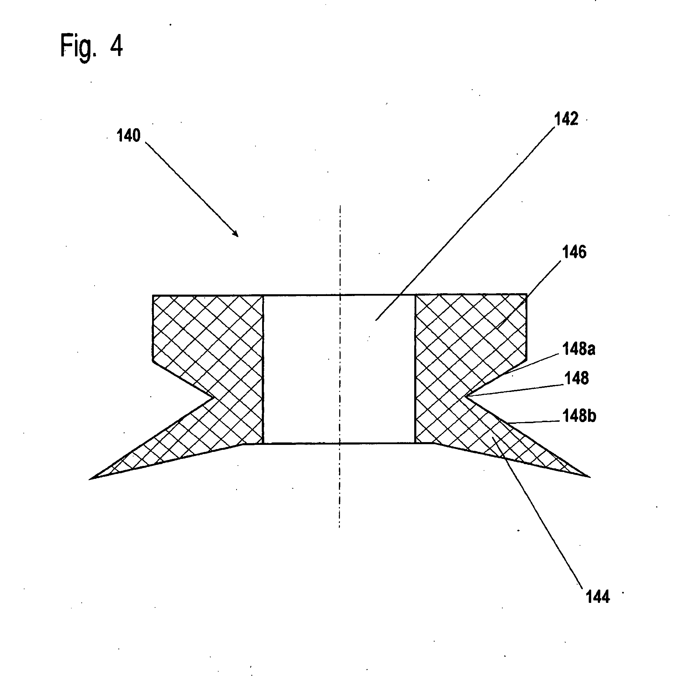

Fig. 4 zeigt eine vereinzelte Schnittansicht des Haltekraft-Erzeugungselements 140 der Ventilkupplungsvorrichtung 100 gemäß dem Ausführungsbeispiel.

Das Haltekraft-Erzeugungselement 140 wird bevorzugt durch ein einstückiges, elastisches, grundlegend und speziell unterseitig tellerförmiges und ringförmiges Formteil bzw. Guss- oder Spritzteil aus beispielsweise PUR bzw. Polyurethan oder einem geeigneten Material mit ähnlichen Eigenschaften gebildet, mit einer Durchgangsöffnung 142 eines Innendurchmessers von beispielsweise 5,4 mm entsprechend dem Durchmesser des als Aufnahme für das Haltekraft-Erzeugungselement 140 dienenden zweiten Abschnitts 130b des Hohlkörpers 130, in welche es nach einem Aufschieben auf und sodann Verschieben entlang des dritten Abschnitts 130c des Hohlkörpers 130 rastend eingreift.

Der Außenumfang des Haltekraft-Erzeugungselements 140 ist so bemessen, dass das Haltekraft-Erzeugungselement 140, die innere Seitenwand des Einsatzstücks 112 nicht berührend, bei einer Aufwärts- bzw. Abwärtsbewegung des Hohlkörpers 130 mit diesem in dem T-förmigen Arbeitsraum 114 aus- bzw. eintaucht. In anderen Worten ist der größte Außendurchmesser des Haltekraft-Erzeugungselements 140 kleiner als der Innendurchmesser des Arbeitsraums 114. Dadurch wird erreicht, dass das sich in dem Arbeitsraum 114 befindende, nicht komprimierbare Fluid während der Bewegung des Haltekraft-Erzeugungselements 140 leicht an dessen Außenumfang vorbei strömen kann und somit die Funktion und die Bewegung des Haltekraft-Erzeugungselements 140 nicht beeinflusst.

Die Form des Haltekraft-Erzeugungselements 140 weist aufgrund der Tellerform ein saugnapfartiges Profil derart auf, dass ein unterer Abschnitt des Haltekraft-Erzeugungselements 140 einen tellerförmigen, federnd elastischen Lippenbereich 144 und ein oberer Abschnitt des Haltekraft-Erzeugungselements 140 einen gegenüber dem Lippenbereich 144 relativ starren Festbereich 146 bilden, wobei der Lippenbereich 144 und der Festbereich 146 durch eine einen kleinsten Außendurchmesser aufweisende Einschnürung 148 mit geneigt verlaufenden Verbindungsflächen 148a, 148b zu jeweils dem Lippenbereich 144 und dem Festbereich 146 getrennt sind. Dadurch ist der Festbereich 146 in der Lage, von oben auf das Haltekraft-Erzeugungselement 140 wirkende Druckkräfte verformungsfrei und damit zugunsten eines stabilen Sitzes des Haltekraft-Erzeugungselements 140 auf den Hohlkörper 130 zu übertragen, während der Lippenbereich 144 eine weiche und federnd elastische, plane bzw. ebene Auflage des Haltekraft-Erzeugungselements 140 mit einer Saugwirkung auf der unteren Bodenfläche des Arbeitsraums 114 bei gleichzeitig vorteilhaftem Strömungs-verhalten des umgebenden Fluids und maximaler Wirkfläche zur Übertragung gewünschter Drücke und Kräfte bereitstellt.

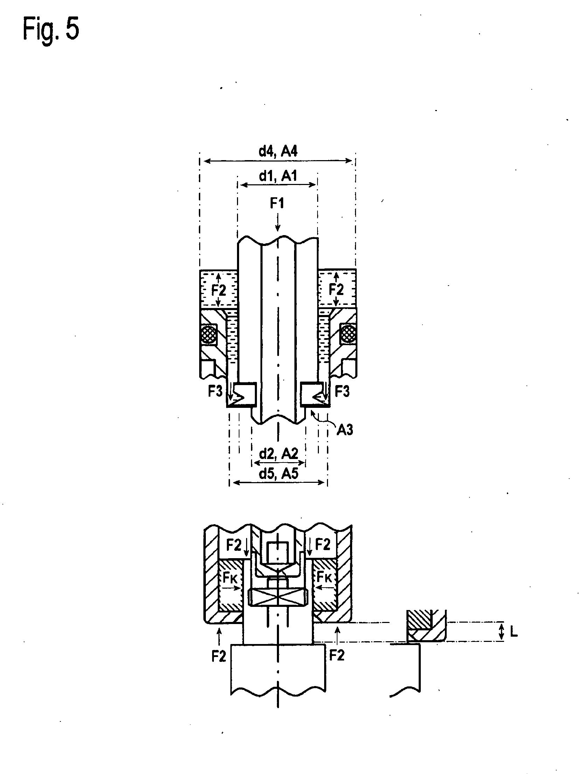

Nachstehend wird die Funktionsweise der wie zuvor beschrieben aufgebauten Ventilkupplungsvorrichtung 100 unter Bezugnahme auf Fig. 5 beschrieben. Fig. 5 zeigt vereinfacht und ausschnittsweise der Fig. 1 und 2 den Arbeitsraum 114 und darauf bezogen an der Funktion der Ventilkupplungs-vorrichtung 100 beteiligte Elemente, Kräfte und Flächen. Elemente in Fig. 5, die gleich Elementen in den vorangehenden Fig. 1 bis 4 sind, sind nicht nochmals mit identischen Bezugszeichen bezeichnet und nicht nochmals ausführlich beschrieben.

In dem nicht aktivierten Zustand der Ventilkupplungsvorrichtung 100 gemäß Fig. 1 ist die Ventilkupplungsvorrichtung 100 über eine mit dem Schlauch-anschlussstück an dem Hohlkörper 130 verbundene Schlauchleitung 300 und ein in dieser vorhandenes, ein manuell bedienbares Steuerventil beinhaltendes (nicht gezeigtes) Handstück mit einem (nicht gezeigten) Druckluftvorrat verbunden. In diesem Zustand ist die Ventilkupplungsvorrichtung 100 locker auf das Reifenventil 200 aufgesetzt, und ist das Steuerventil in dem Handstück geschlossen.

Ein Benutzer der Ventilkupplungsvorrichtung 100 greift in dem nicht aktiven Zustand beispielsweise das aus der Stirnseite des ersten Gehäuse-abschnitts 110 ragende Schlauchanschlussstück des Hohlkörpers 130 und drückt den Hohlkörper 130 mit einer gewissen Druckkraft F1 nach unten, d. h. in Richtung des Reifenventils 200. Da die Ventilkupplungsvorrichtung 100 bereits locker auf dem Reifenventil 200 sitzt, d. h. der obere Umfangsrand des Reifenventils 200 wie in den Fig. 1, 2 und 5 dargestellt gegen die untere Außenfläche des Einsatzstücks 112 anliegt und sich daher die Ventilkupplungs-vorrichtung 100 nicht nach unten bewegen kann, verfährt vermittels der Druckkraft F1 der Hohlkörper 130 im Inneren der Ventilkupplungsvorrichtung 100 nach unten, bis er wie in Fig. 2 gezeigt auf den Ventilstift des Reifenventils 200 trifft, diesen sodann niederdrückt und dadurch den Strömungskanal in den Reifen öffnet. Gleichzeitig nimmt der Hohlkörper 130 in seiner Abwärtsbewegung das auf ihm an dem zweiten Abschnitt 130b sitzende Haltekraft-Erzeugungselement 140 mit und bewegt es durch den fluidgefüllten Arbeitsraum 114, bis es gegen die untere Bodenfläche des Arbeitsraums 114 zu liegen kommt. Der Hub bzw. Weg des Hohlkörpers 130 ist gegebenenfalls durch Wählen einer geeigneten Einschraub-tiefe des zweiten Gehäuseabschnitts 120 in den ersten Gehäuseabschnitt 110 manuell einstellbar.

Aufgrund der Bewegung des als Druckkolben wirkenden Hohlkörpers 130 nach unten durch die von dem Benutzer aufgewendete Druckkraft F1 verdrängt der Hohlkörper 130 ein Fluidvolumen entsprechend seinem in den Arbeitsraum 114 zusätzlich eintauchenden Volumen. Da das Fluid in dem Arbeitsraum 114 inkompressibel ist, steigt der Druck in dem Arbeitsraum 114 und entsteht in diesem eine in zu der Druckkraft F1 des Benutzers entgegengesetzter Richtung, d. h. nach oben, wirkende Kompressionskraft F2, die aufgrund der beteiligten Flächen um ein Mehrfaches höher ist als die Druckkraft F1.

Diese Kompressionskraft F2 greift an der inneren Wand der Stirnfläche des ersten Gehäuseabschnitts 110 an, zieht den ersten Gehäuse-abschnitt 110 und den damit verschraubten zweiten Gehäuseabschnitt 120 nach oben, und drückt gleichzeitig das gegen die Gehäuseabschnitte 110, 120 bewegliche Einsatzstück 112 nach unten, um für ein Druckgleichgewicht in der Ventilkupplungsvorrichtung 100 zu sorgen. An der Außenseite der Vorrichtung ist dies an einer entsprechenden Aufwärts- bzw. Hubbewegung der Weglänge L des Gehäuses aus der Gehäuseposition in dem nicht aktiven Zustand nach oben in eine Gehäuseposition in dem aktiven Zustand erkennbar. Wie vorstehend erwähnt, beträgt die Weglänge L in diesem Ausführungsbeispiel etwa 1,5 mm.

Dabei gleiten die Innenwand des ersten Gehäuseabschnitts 110 und die daran anliegende Körperfläche des Einsatzstücks 112 entlang dieses Wegs gegeneinander. Das Einsatzstück 112 selbst bleibt, gehalten durch das Haltekraft-Erzeugungselement 140 und die KraftF1, positionell unverändert in Anlage gegen den stirnseitigen Umfang des Reifenventils 200, während die Aufwärtsbewegung des ersten und des zweiten Gehäuseabschnitts 110, 120, in anderen Worten die Kompressionskraft F2, das elastische Element 150 verkürzt und komprimiert. Dadurch wird eine Halte- bzw. Anpresskraft desselben seitlich gegen die Außenhülse des Reifenventils 200 und eine Verzahnung des elastischen Elements 150 mit dem Gewinde dieser Außenhülse erzeugt, durch welche sich die Ventilkupplungsvorrichtung 100 sodann selbst auf dem Reifenventil 100 hält.

Der erste und der zweite Gehäuseabschnitt 110, 120 wirken somit nach Art eines Hub- bzw. Arbeitskolbens, dessen Hub- bzw. Arbeitsbewegung die Druck-Schubbewegung des Hohlkörpers 130 durch den Benutzer über Ausgleichsvorgänge im Inneren der Ventilkupplungsvorrichtung 100 in eine gewünschte und kraftvolle Selbsthaltung an dem Ventilaufnahmeelement 150 umsetzt.

Vermittels der weichen und federnd elastischen Auflage des Haltekraft-Erzeugungselements 140 auf der unteren Bodenfläche des Arbeitsraums 114 erfolgt unter der Wirkung einer Druckkraft nach unten in Verbindung mit dem tellerförmigen Lippenbereich 144 des Haltekraft-Erzeugungselements 140 zunächst eine Verdrängung der sich unter dem Lippenbereich 144 befindenden Fluidmenge über den Lippenrand mit kleinerem Durchmesser als der Innendurchmesser des Arbeitsraums 114. Gleichzeitig entwickelt der tellerförmige Lippenbereich 144 eine Saugwirkung an der glatten Bodenfläche des Arbeitsraums 114. In dem nach der Verdrängung fluidfreien Zustand unter dem Lippenbereich 144, d. h. ohne einen von unten nach oben auf das Haltekraft-Erzeugungselement 140 wirkenden Fluiddruck, und aufgrund des damit nur noch von oben nach unten auf das Haltekraft-Erzeugungselement 140 wirkenden Fluiddrucks in dem Arbeitsraum 114 haftet das Haltekraft-Erzeugungs-element 140 saugend auf der unteren Bodenfläche des Arbeitsraums 114. Dies entspricht einer auf das Haltekraft-Erzeugungselement 140 wirkenden Haltekraft.

Das Haltekraft-Erzeugungselement 140 entwickelt in anderen Worten an der unteren Bodenfläche des Arbeitsraums 114 das Prinzip eines Saugnapfes, der auf die Bodenfläche des Arbeitsraums gedrückt wird, und der nach der Verdrängung des sich darunter befindenden Fluids mit einer sich aus an beteiligten Flächen der Ventilkupplungsvorrichtung 100 angreifenden Kräften und Drücken berechenbaren Haltekraft F3 an der unteren Bodenfläche des Arbeitsraums 154 anhaftet. Die Haltekraft F3 bewirkt, dass sich der Hohlkörper 130, auf dessen unteres Ende der Reifeninnendruck in einer Richtung nach oben wirkt, bis zu einem die Haltekraft F3 ausgleichenden Reifeninnendruck nicht wieder ohne manuelles Eingreifen und Überwinden der Haltekraft F3 durch den Benutzer von dem Ventilstift des Reifenventils 200 löst und nach oben bewegt. Da eine zu frühe oder ungewollte Aufwärtsbewegung des Hohlkörpers 130 gleichzeitig auch die Kompressionskraft F2 zunächst verringern würde und schließlich zusammen-brechen ließe, trägt in anderen Worten die Haltekraft F3 dazu bei, dass in dem aktiven Zustand der Ventilkupplungsvorrichtung 100 der Luftkanal bis zum Erreichen eines der Haltekraft F3 entsprechenden Reifeninnendrucks geöffnet bleibt und die über die Kompressionskraft F2 erhaltene Selbsthaltewirkung der Ventilkupplungsvorrichtung 100 an dem Reifenventil 200 aufrecht erhalten wird.

In diesem nun aktiven Zustand der Ventilkupplungsvorrichtung 100, d. h. mit wirksamer Selbsthaltung und geöffnetem Luftkanal, kann der Benutzer beispielsweise das Handventil an dem Handstück in der Schlauchleitung 300 wahlfrei öffnen und schließen, um den gewünschten Reifendruck zu erzielen.

Zum Aufheben des aktiven Aufsetzzustands und Lösen der Ventilkupplungsvorrichtung 100 aus dem selbst haltenden Zustand an dem Reifenventil 200 muss von dem Benutzer an dem Hohlkörper 130 eine entgegengesetzt zu der Haltekraft F3 wirkende Zugkraft größer als die Haltekraft F3 aufgewandt werden, d. h. der Benutzer muss genügend Kraft aufwenden, um die Saughaftung des Haltekraft-Erzeugungselements 140 an der unteren Bodenfläche des Arbeitsraums 114 zu überwinden und den Hohlkörper 130 mitsamt dem Haltekraft-Erzeugungselement 140 aus ihrer unteren Position des aktiven Zustands nach oben in die Position des nicht aktiven Zustands zurückzuziehen. In diesem Fall wird in einem entgegengesetzt verlaufenden Betriebsablauf, in dem sich in Verbindung mit einer Verkleinerung des Volumens des Arbeitsraums 114 wiederum geänderte Kräfte- und Druckgleichgewichte einstellen, die Halte- bzw. Anpresskraft an dem Reifenventil 200 aufgehoben, und kann die Ventilkupplungsvorrichtung 100 sodann ohne Weiteres von diesem abgezogen werden. Danach ist die Ventilkupplungsvorrichtung 100 zur weiteren Verwendung unmittelbar erneut einsatzbereit.

Wie an anderer Stelle bereits erwähnt, ist in Fig. 5 das Haltekraft-Erzeugungselement 140 in seiner in dem aktiven Zustand die Saugwirkung entfaltenden Endposition dargestellt, in welcher die Unterseite des Lippenbereichs 144 so plan wie möglich auf der unteren Bodenfläche des Arbeitsraums 114 aufliegt, während die Fig. 1 und 2 das Haltekraft-Erzeugungselement 140 zur Verdeutlichung der Tellerform in einer Lage kurz vor Erreichen dieser Endposition darstellen. So plan wie möglich aufliegend im Sinne des Ausführungsbeispiels bedeutet, dass eine aufgrund etwa der Form des Haltekraft-Erzeugungselements 140 möglicherweise nicht ganzflächig vollkommen ebene Auflage des unteren Lippenbereichs 144 vernachlässigbar und für die Funktion der Ventilkupplungsvorrichtung 100 bedeutungslos ist.

Um den bei aufgesetzter Ventilkupplungsvorrichtung 100 und damit geöffnetem Luftkanal auf den Hohlkörper 130 wirkenden Reifeninnendruck zu überwinden, muss die Haltekraft F3 einerseits ausreichend höher sein als dieser Reifeninnendruck, damit der Luftkanal aus dem Druckluftvorrat in den Reifen in dem aktiven Zustand geöffnet bleibt. Andererseits muss jedoch auch die durch die Druckkraft F1 erzeugbare Kompressionskraft F2 hoch genug sein, um die Ventilkupplungsvorrichtung 100 bis zu einem gewünschten Reifenfülldruck bzw. bis zu einem Auslegungsmaximaldruck sicher und selbsttätig an bzw. auf dem Reifenventil 100 zu halten.

Bei einer versuchsweise hergestellten Ausführungsform der Ventilkupplungsvorrichtung 100 mit den vorstehend beschriebenen Eigenschaften und Größenordnungen wurden folgende Werte näherungsweise ermittelt:

$$\text{Druckkraft: } F1 = 40 \text{ N}$$

Abschnitt 130a des Hohlkörpers 130:

$$\text{Durchmesser } d1 = 8 \times 10^{-3} \text{ m}$$

$$\text{Querschnittsfläche } A1 = 5 \times 10^{-5} \text{ m}^2$$

Abschnitt 130c des Hohlkörpers 130:

$$\text{Durchmesser } d\,2 = 6 \times 10^{-3} \text{ m}$$

$$\text{Querschnittsfläche } A2 = 2,8 \times 10^{-5} \text{ m}^2$$

Wirksame Fläche bezüglich F1
des Haltekraft-Erzeugungselements 140:

$$(A3 = A1 - A2) \quad A3 = 2,2 \times 10^{-5} \text{ m}^2$$

Innere Stirnfläche des ersten Gehäuseabschnitts 110:

$$\text{Durchmesser } d4 = 17 \times 10^{-3} \text{ m}$$

$$\text{Fläche } A4 = 22,7 \times 10^{-5} \text{ m}^2$$

Fläche des Haltekraft-Erzeugungselements 140:

$$\text{Durchmesser } d5 = 11 \times 10^{-3} \text{ m}$$

$$\text{Fläche } A5 = 9,5 \times 10^{-5} \text{ m}^2$$

Aus einer von einem Benutzer aufgewendeten Druckkraft F1 von 40 N resultiert gemäß den nachstehenden Gleichungen (1) und (2)

$$P = F1 \,/\, A3 \times \eta \quad (1)$$

$$A = d^2 \times \pi \,/\, 4 \quad (2)$$

worin $\eta$ eine Viskosität des in dem Arbeitsraum 114 vorhandenen Fluids kennzeichnet und beispielhaft zu 0,88 angenommen wird, für den durch die Kraft F1 erzeugten Druck P

$$P = F1 \,/\, (A1 - A2) \times \eta = 40 \text{ N} \,/\, 2,2 \times 10^{-5} \text{ m}^2 \times 0,88 \cong 16 \times 10^5 \text{ Pa} \quad (3)$$

Mit Gleichung (3) errechnet sich die Kompressionskraft F2 zu

$$F2 = (A4 - A1) \times P = 17,7 \times 10^{-5} \text{ m}^2 \times 16 \times 10^5 \text{ Pa} \cong 283 \text{ N} \quad (4)$$

und die Haltekraft F3 zu

$$F3 = (A5 - A1) \times P = 4,5 \times 10^{-5} \text{ m}^2 \times 16 \times 10^5 \text{ Pa} \cong 72 \text{ N}$$

Somit erzeugt eine äußerlich manuell aufgewendete Druckkraft F1 von 40 N eine mehr als siebenfache Kompressionskraft F2 zur Erzeugung der Klemmkraft an dem Reifenventil 200 und eine Haltekraft F3 von etwa 72 N in der Ventilkupplungsvorrichtung 100, so dass an dem Reifenventil 200 sowohl eine zuverlässige Klemmwirkung des elastischen Elements 150 als auch ein weit reichendes Offenhalten des Luftkanals, und damit eine luftdichte und gleichzeitig sichere Selbsthaltung der Ventilkupplungs-vorrichtung 100 auch gegen einen höheren, für die gewünschte Befüllung ausreichenden Reifeninnendruck bereitgestellt wird.

Da aufgrund der kurzzeitigen Aktivierungs- und Deaktivierungs-Vorgänge durch Betätigen des Hohlkörpers 130 bei bereits locker und mit einer Grunddichtwirkung des elastischen Ventilaufnahmeelements 150 oder selbst haltender aufgesetzter Ventilkupplungsvorrichtung 100 während und nach der Aktivierung nahezu keine Luft entweicht und damit kein nicht vernachlässigbarer Luftverlust auftritt, ermöglicht die Ventilkupplungsvorrichtung 100 eine äußerst exakte Druckmessung sowohl bei einer Befüllung eines Reifens als auch bei einer Korrektur des Reifenfülldrucks eines bereits befüllten Reifens.

In einer Modifikation der Ventilkupplungsvorrichtung 100 kann das Haltekraft-Erzeugungselement 140 einstückig mit dem Hohlkörper 130 erzeugt sein und somit aus demselben Material wie der Hohlkörper 130 bestehen. Alternativ kann das Haltekraft-Erzeugungselement 140 ein starrer, scheiben-, kegel- oder zylinderförmiger Körper sein und aus demselben Material wie der Hohlkörper 130 oder einem geeigneten, mit dem Hohlkörper 130 mechanisch dauerhaft verbindbaren Material bestehen. Bedarfsweise ist der Körper so bemaßt, dass wenigstens eine Öffnung bzw. eine Durchbohrung für wenigstens eine Fluidpassage und wenigstens ein Aufnahmeraum zur Aufnahme von Mitteln zum Öffnen und Schließen der wenigstens einen Fluidpassage, etwa Elemente mit Federwirkung und bewegliche, gegen einen sitzartig ausgeformten Abschnitt der Fluidpassage abdichtende Teile, angeordnet werden können.

Diese Modifikation kann zur beispielsweise sicheren Erzielung eines hohen Fülldrucks in einem zu befüllenden Gegenstand vorteilhaft sein. Mit einem starren Haltekraft-Erzeugungselement 140 werden etwaige Einflüsse einer der Haltekraft F3 entgegenwirkenden Kraft, die aus dem Innendruck des zu befüllenden Gegenstands und/oder auftretenden Luftströmungen resultiert, auf das Haltekraft-Erzeugungselement 140 einwirkt und dieses in der Löse-oder Abheberichtung zu verformen sucht, verringert. Dadurch kann die Selbsthaltung der Ventilkupplungsvorrichtung an dem Ventilaufnahmeelement 150 nochmals verbessert werden.

In einer nochmals weiteren Modifikation der Ventilkupplungsvorrichtung 100 kann an einem oberen Abschnitt des ersten Gehäuseabschnitts 110 eine mechanisch auf den Hohlkörper 130 einwirkende Verriegelungsanordnung (nicht gezeigt) vorgesehen sein.

Die Verriegelungsanordnung kann bevorzugt aus einer verschieb- und/oder verschwenkbaren Hebelanordnung bestehen, die an der Außenseite des ersten Gehäuseabschnitts 110 zwischen einem manuell bedienbaren ersten Hebelabschnitt und einem in eine teilweise oder ganz umlaufende Ausnehmung (nicht gezeigt) an dem Hohlkörper 130, beispielsweise an dem ersten Abschnitt 130a desselben, eingereifenden zweiten Hebelabschnitt gelagert angelenkt ist. Die Hebelanordnung wird bevorzugt so ausgeführt, dass sie zum Einen in der Ausnehmung selbstarretierend ist, d. h. bei einem Aufsetzen der Ventilkupplungsvorrichtung 100 auf das Reifenventil 200 ohne weiteres Zutun des Benutzers in einer vorbestimmten Einraststellung einrastet, und zum Anderen eine ausreichende Hebelwirkung bereitstellt, die ein leichtes Lösen der Arretierung durch den Benutzer erlaubt. Hierzu kann in einem Einbauraum in dem ersten Gehäuseabschnitt 110 wenigstens ein elastisches Element oder ein Federelement (nicht gezeigt) angeordnet sein, welches die Arretierung und/oder das Lösen der Arretierung unterstützt.

Alternativ kann die Verriegelungsanordnung aus einer Schieberanordnung bestehen, bei welcher, gegebenenfalls ebenfalls durch wenigstens ein elastisches Element oder Federelement geeignet unterstützt, wenigstens ein Schiebeelement waagerecht in dem ersten Gehäuseabschnitt 110 verschiebbar ist und im eingeschobenen Zustand verriegelnd in die Ausnehmung des Hohlkörpers 130 einrastet und in einer entgegengesetzten Bewegung wieder entriegelnd aus dieser ausfährt.

Die Verriegelungsanordnung an dem ersten Gehäuseabschnitt 110 sowie ihr Arbeitsraum werden bevorzugt an einem geeignet ausgestalteten Gehäuseteil oberhalb des ersten Dichtmittels 118a angeordnet, und die Ausnehmung an dem ersten Abschnitt 130a des Hohlkörpers 130 wird der Verriegelungsanordnung entsprechend bevorzugt so angeordnet, dass sie während der Bewegung des Hohlkörpers 130 nur oberhalb des ersten Dichtmittels 118a verfährt. Damit verbleiben Verriegelungsanordnung und Ausnehmung während der gesamten Benutzung der Ventilkupplungsvorrichtung 100 immer außerhalb des Fluidraums der Vorrichtung.

Eine Verriegelungsanordnung wie vorstehend beschrieben kann in Verbindung mit dem elastischen oder starren Haltekraft-Erzeugungselement 140 gewährleisten, dass die Ventilkupplungsvorrichtung 100 auch unter unbekannten oder grenzwertigen Benutzungszuständen von einem Benutzer zusätzlich oder auch nur vorsorglich selbsttätig und/oder manuell sicher festgelegt werden kann. Darüber hinaus kann der Benutzer ein korrektes Aufsetzen der Ventilkupplungsvorrichtung 100 auch haptisch erfassen, wenn die Verriegelungsvorrichtung so ausgestaltet ist, dass sie nur bei korrektem und betriebsbereitem Sitz der Ventilkupplungsvorrichtung 100 auf dem Reifenventil 200 betätigbar ist.

Die Ventilkupplungsvorrichtung 100 wurde vorstehend beispielhaft als rundförmig mit im Wesentlichen Rundsymmetrie beschrieben. Ihre Form ist jedoch nicht auf eine Rundform beschränkt, sondern kann beispielsweise auch mehrflächig oder freiförmig ausgeführt werden, solange ihre grundlegende Funktionsweise beibehaltbar ist. Ferner ist die Ventilkupplungsvorrichtung 100 allgemein nicht auf eine Ausführung bestimmter Teile aus Kunststoff und/oder Metall beschränkt, sondern es ist eine auch jeweiligen Anforderungen entsprechende Kombination einzelner Teile aus Kunststoff und einzelner Teile aus Metall ebenso wie eine Ausführung ganz aus Kunststoff, Metall oder jedem anderen geeigneten Material möglich, solange ihre grundlegende Funktionsweise beibehaltbar ist. Schließlich ist die Ventilkupplungsvorrichtung 100 nicht auf die beispielhaft angegebenen Maße beschränkt, sondern es können in Übereinstimmung mit einer tatsächlichen Ausführungsform abweichende Maße in geeigneter Beziehung zueinander vorliegen. Ohne dass dies hierin explizit beschrieben zu werden braucht, ist selbstverständlich, dass bei einer tatsächlichen Ausführungsform über die beispielsweise und zur Verdeutlichung von Größenordnungen angegebenen Maße hinaus in Abhängigkeit von einer gewählten Herstellungsart und jeweils verwendeter Werkstoffe geeignete Wandstärken, Gewindeformen, Toleranzen, Passungen, Übergangsflächen, Entgratungen und dergleichen vorzusehen sind.

Die Erfindung ist damit in einem weiten Bereich gewerblich anwendbar, allgemein bei mit einem Gas wie beispielsweise Luft oder Stickstoff befüllbaren Gegenständen wie beispielsweise Hohlkörpern, welche mit kompatiblen Ventilen versehen sind, und insbesondere beispielsweise bei mit einem Gas wie etwa Luft und/oder Stickstoff oder einem Gemisch hiervon befüllbaren Reifen und damit ausgestatteten Vorrichtungen und Fahrzeugen in der Erstausrüstung, in Reifenmontagebetrieben, in Servicebetrieben wie etwa Kraftstoffversorgungs- oder Ladestationen und dergleichen, auf Baustellen oder in der Pannenhilfe.

Die Erfindung wurde vorstehend anhand eines bevorzugten Ausführungsbeispiels beschrieben. Es versteht sich, dass sich dem Fachmann ohne Weiteres aufzeigende Modifikationen, Änderungen und Abwandlungen, die innerhalb des allein durch die beigefügten Patentansprüche bestimmten Schutzumfangs liegen, von der Erfindung mit umfasst werden, ohne den Schutzbereich zu verlassen.

Wie vorstehend beschrieben wurde, weist somit eine Ventilkupplungsvorrichtung ein Gehäuse 110, 120, einen fluidgefüllten Arbeitsraum 114 in dem Gehäuse 110, 120, einen Hohlkörper 130, der in dem Gehäuse 110, 120 in dem Arbeitsraum 114 bewegbar aufgenommen ist und in seinem Inneren einen durch die Ventilkupplungsvorrichtung 100 verlaufenden fluidfreien Strömungskanal für ein Gas bereitstellt, und ein Haltekraft-Erzeugungselement 140, welches in Wirkverbindung mit dem Hohlkörper 130 in dem Arbeitsraum 114 angeordnet ist, auf. Der Hohlkörper 130 erzeugt bei einer Bewegung aus einer ersten Lage in eine zweite Lage in dem Arbeitsraum 114 über das Fluid eine auf eine Wandung des Gehäuses 110, 120 wirkende erste Kraft F2 in einer ersten Richtung, das Gehäuse 110, 120 erzeugt aus der ersten Kraft F2 an einem Ventilaufnahme-element 150 eine Ventilspannkraft $F_K$, und mit Erreichen der zweiten Lage erzeugt das Haltekraft-Erzeugungselement 140 in dem Arbeitsraum 114 eine zweite Kraft F3 in einer zweiten Richtung, die den Hohlkörper 130 und das Haltekraft-Erzeugungselement in der zweiten Lage hält.

**Patentansprüche**

1. Ventilkupplungsvorrichtung, aufweisend ein Gehäuse (110, 120);
   einen fluidgefüllten Arbeitsraum (114) in dem Gehäuse (110, 120); einen Hohlkörper (130), der in dem Gehäuse (110, 120) in dem Arbeitsraum (114) bewegbar aufgenommen ist und in seinem Inneren einen durch die Ventilkupplungsvorrichtung (100) verlaufenden fluidfreien Strömungskanal für ein Gas bereitstellt; und
   ein Haltekraft-Erzeugungselement (140), welches in Wirkverbindung mit dem Hohlkörper (130) in dem Arbeitsraum (114) angeordnet ist,
   wobei der Hohlkörper (130) bei einer Bewegung aus einer ersten Lage in eine zweite Lage in dem Arbeitsraum (114) über das Fluid eine auf eine Wandung des Gehäuses (110, 120) wirkende erste Kraft (F2) in einer ersten Richtung erzeugt;
   wobei das Gehäuse (110, 120) aus der ersten Kraft (F2) an einem Ventilaufnahmeelement (150) der Ventilkupplungsvorrichtung eine Ventilspannkraft ($F_K$) erzeugt, und wobei mit Erreichen der zweiten Lage das Haltekraft-Erzeugungselement (140) in dem Arbeitsraum (114) eine zweite Kraft (F3) in einer zweiten Richtung erzeugt, die den Hohlkörper (130) und das Haltekraft-Erzeugungselement in der zweiten Lage hält.

2. Ventilkupplungsvorrichtung nach Anspruch 1, **gekennzeichnet durch** ein in dem Gehäuse (110, 120) beweglich angeordnetes Einsatzstück (112), das eine Ausnehmung aufweist, die mit einer inneren Wandung des Gehäuses (110) den Arbeitsraum (114) höhen- und volumenvariabel ausformt, und auf das ebenfalls die erste Kraft (F2) wirkt.

3. Ventilkupplungsvorrichtung nach einem der vorangehenden Ansprüche, **dadurch gekennzeichnet, dass** das Gehäuse (110, 120) zumindest einen ersten Gehäuseabschnitt (110) und einen zweiten Gehäuseabschnitt (120) aufweist, wobei ein unterer Abschnitt des ersten Gehäuseabschnitts (110) ein erstes Außen- oder Innengewinde aufweist und ein oberer Abschnitt des zweiten Gehäuseabschnitts (120) ein zu dem ersten Gewinde korrespondierendes Innen- oder Außengewinde aufweist, und mittels den Gewinden der erste und der zweite Gehäuseabschnitt (110, 120) auf einer variablen Eingrifflänge miteinander verschraubbar sind.

4. Ventilkupplungsvorrichtung nach einem der vorangehenden Ansprüche, **dadurch gekennzeichnet, dass** der Arbeitsraum (114) gasfrei mit einem inkompressiblen Fluid befüllt ist, und das Fluid ein Hydrauliköl, ein Getriebeöl, oder ein Glykolgemisch auf Wasserbasis ist.

5. Ventilkupplungsvorrichtung nach einem der vorangehenden Ansprüche, **dadurch gekennzeichnet, dass** der Hohlkörper (130) ein erstes Ende, an dem ein Schlauchanschlussstück für einen gas- und druckdichten Anschluss einer Gaszufuhrleitung (300) angeordnet ist;
ein zweites Ende, an dem eine Druckfläche zum Betätigen eines Ventilstifts eines an dem Ventilaufnahmeelement (150) aufnehmbaren Ventils (200) angeordnet ist; und
zwischen dem ersten und dem zweiten Ende
einen ersten Abschnitt (130a) einer ersten Länge und eines ersten Durchmessers (d1),
einen zweiten Abschnitt (130b) einer zweiten Länge und eines zweiten Durchmessers, der kleiner ist als der erste Durchmesser (d1); und
einen dritten Abschnitt (130c) einer dritten Länge und eines dritten Durchmessers (d2), der kleiner ist als der erste Durchmesser (d1) und größer ist als der zweite Durchmesser, aufweist, wobei
der zweite Abschnitt (130b) eine Aufnahme für das Haltekraft-Erzeugungselement (140) an dem Hohlkörper (130) bildet;
der erste Abschnitt (130a) in einer wirksamen Länge so bemessen ist, dass das Haltekraft-Erzeugungselement (140) in der ersten Lage gegen eine obere Wandung des Arbeitsraums (114) anlegbar ist und in der zweiten Lage gegen eine untere Wandung des Arbeitsraums (114) anlegbar ist; und
der dritte Abschnitt (130c) in einer wirksamen Länge so bemessen ist, dass in der zweiten Lage die Druckfläche den Ventilstift zum Öffnen und/oder Schließen des Strömungskanals betätigt.

6. Ventilkupplungsvorrichtung nach einem der vorangehenden Ansprüche, **gekennzeichnet durch** ein erstes Dichtmittel (118a), ein zweites Dichtmittel (112b) und ein drittes Dichtmittel (112e), wobei
das erste Dichtmittel (118a) in einer Ausnehmung (118) in einer oberen Wandung des Gehäuses (110) angeordnet ist und den Arbeitsraum (114) an einem ersten Abschnitt (130a) des Hohlkörpers (130) gegen die Außenseite der Ventilkupplungsvorrichtung (100) abdichtet;
das zweite Dichtmittel (112b) in einer Ausnehmung (112b) an einer inneren Wandung eines Einsatzstücks (112) in dem Gehäuse (110, 120) angeordnet ist und den Arbeitsraum (114) an einem dritten Abschnitt (130c) des Hohlkörpers (130) gegen die Außenseite der Ventilkupplungsvorrichtung (100) abdichtet; und
das dritte Dichtmittel (112e) in einem Wandungsabschnitt (112d) des Einsatzstücks (112) angeordnet ist und den Arbeitsraum (114) an einer Innenwandung des Gehäuses (110) gegen die Außenseite der Ventilkupplungsvorrichtung (100) abdichtet.

7. Ventilkupplungsvorrichtung nach einem der vorangehenden Ansprüche, **gekennzeichnet durch** zumindest eine gas- und fluiddicht verschließbare Öffnung (119, 119a) in einer oberen Wandung des Gehäuses (110), **durch** welche der Arbeitsraum (114) befüllbar, entleerbar und/oder entlüftbar ist.

8. Ventilkupplungsvorrichtung nach einem der vorangehenden Ansprüche, **dadurch gekennzeichnet, dass** das Ventilaufnahmeelement (150) ein elastisches ringförmiges Element ist, zwischen einer unteren Außenfläche eines Einsatzstücks (112) und einer unteren, eine Öffnung entsprechend der Ringform des Ventilaufnahmeelements (150) aufweisende Innenfläche des Gehäuses (120) angeordnet ist, und zur Erzeugung der Ventilspannkraft ($F_K$) vermittels einer Verschiebebewegung des Einsatzstücks (112) und des Gehäuses (110, 120) gegeneinander in seiner Längenrichtung komprimierbar ist.

9.  Ventilkupplungsvorrichtung nach einem der vorangehenden Ansprüche, **dadurch gekennzeichnet, dass** das Haltekraft-Erzeugungselement (140) ein ringförmiger Körper ist und einen elastischen Lippenbereich (144) und einen Festbereich (146) aufweist, wobei der Lippenbereich (144) eine zu einer Bodenfläche des Arbeitsraums (114) gerichtete Tellerform hat derart, dass in der zweiten Lage der Lippenbereich (114) für ein planes und unterhalb fluidfreies Aufliegen des Haltekraft-Erzeugungselements (140) auf der Bodenfläche des Arbeitsraums (114) elastisch verformbar ist.

**Claims**

1.  A valve coupling device, comprising
    a housing (110, 120);
    a fluid-filled working space (114) in said housing (110, 120);
    a hollow body (130) movably received in the housing (110, 120) in the working space (114) and providing, in its interior, a fluid free flow channel for a gas extending through the valve coupling means (100); and
    a holding force generating element (140) which is disposed in operative connection with the hollow body (130) in the working space (114),
    wherein the hollow body (130) generates, during a movement from a first position to a second position in the working space (114) and via the fluid, a first force (F2) acting in a first direction upon a wall of the housing (110, 120),
    wherein the housing (110, 120) generates, from the first force (F2), a valve clamping force ($F_K$) at a valve accommodating element (150) of the valve coupling device, and
    wherein upon reaching the second position, the holding force-generating element (140) in the working space (114) generates a second force (F3) in a second direction that holds the hollow body (130) and the holding force generating element in the second position.

2.  The valve coupling device according to claim 1, **characterized by** an insert (112) movably arranged in the housing (110, 120) which comprises a recess that forms, with an inner wall of the housing (110), the working space (114) variably in height and volume, and upon which the first force (F2) also acts.

3.  The valve coupling device according to any one of the preceding claims, **characterized in that** the housing (110, 120) comprises at least a first housing portion (110) and a second housing portion (120), wherein a lower portion of the first housing portion (110) comprises a first male or female thread and an upper portion of the second housing portion (120) comprises a female or male thread corresponding to the first thread, and the first and the second housing portions (110, 120) are screwable together on a variable length of engagement by means of the threads.

4.  The valve coupling device according to any one of the preceding claims, **characterized in that** the working space (114) is free of gas and filled with an incompressible fluid, and the fluid is a hydraulic oil, a gear oil, or a water-based glycol mixture.

5.  The valve coupling device according to any one of the preceding claims, **characterized in that** the hollow body (130) comprises
    a first end at which a hose connecting piece for a gas and pressure-tight connection of a gas supply line (300) is disposed;
    a second end at which a pressure surface for actuating a valve pin of a valve (200) receivable on the valve accommodating element (150) is arranged; and
    comprises between the first and the second end
    a first portion (130a) of a first length and a first diameter (d1),
    a second portion (130b) of a second length and a second diameter which is smaller than the first diameter (d1); and
    a third portion (130c) of a third length and a third diameter (d2) which is smaller than the first diameter (d1) and larger than the second diameter, wherein
    the second portion (130b) forms an accommodation for the holding force generating element (140) on the hollow body (130);
    the first portion (130a) is sized in an effective length such that the holding force generating element (140) is in the first position applicable against an upper wall of the working space (114) and in the second position applicable against a lower wall of the working space (114); and
    the third section (130c) is sized in an effective length such that in the second position the pressure surface of the valve pin is actuated to open and/or close the flow channel.

**6.** The valve coupling device according to one of the preceding claims, **characterized by** a first sealing means (118a), a second sealing means (112b) and a third sealing means (112e), wherein

the first sealing means (118a) is disposed in a recess (118) in an upper wall of the housing (110) and arranged to seal the working space (114) at a first portion (130a) of the hollow body (130) against the outside of the valve coupling device (100);

the second sealing means (112b) is disposed in a recess (112b) on an inner wall of an insert (112) in the housing (110, 120) and arranged to seal the working space (114) at a third portion (130c) of the hollow body (130) against the outside of the valve coupling device (100); and

the third sealing means (112e) is disposed in a wall portion (112d) of the insert (112) and arranged to seal the working space (114) at an inner wall of the housing (110) against the outside of the valve coupling device (100).

**7.** The valve coupling device according to one of the preceding claims, **characterized by** at least one opening (119, 119a), which is sealable in a gas tight and fluid tight manner, in an upper wall of the housing (110) through which the working space (114) can be filled, emptied and/or be vented.

**8.** The valve coupling device according to any one of the preceding claims, **characterized in that** the valve accommodating element (150) is a resilient annular member, is disposed between a lower outer surface of an insert (112) and a bottom inner surface of the housing (120) having an opening corresponding to the annular shape of the valve accommodating element (150), and is compressible to generate the valve clamping force ($F_K$) by means of a sliding movement of the insert (112) and the housing (110, 120) against each other in its length direction.

**9.** The valve coupling device according to any one of the preceding claims, **characterized in that** the holding force generating element (140) is an annular body and comprises a resilient lip portion (144) and a fixed area (146), said lip portion (144) having a plate shape oriented toward a bottom surface of the working space (114) such that in the second position the lip portion (114) is elastically deformable for a planar and underneath fluid-free seating of the holding force-generating element (140) on the bottom surface of the working chamber (114).

## Revendications

**1.** Dispositif de couplage d'une soupape, comprenant

une boîte (110, 120);

un espace de travail (114) rempli d'un fluide dans la boîte (110, 120);

un corps creux (130) qui est reçu de manière mobile dans l'espace de travail (114) dans la boîte (110, 120) et fournit en son intérieur, s'étendant au travers du dispositif de couplage d'une soupape (100), un canal d'écoulement dénué de fluide pour un gaz; et

un élément de génération d'une force d'arrêt (140) qui est disposé en liaison fonctionnelle avec le corps creux (130) dans l'espace de travail (114),

dans lequel le corps creux (130) génère, lors d'un mouvement d'une première position à une seconde position dans l'espace de travail (114) et par le fluide, une première force (F2) agissant à une paroi de la boîte (110, 120) dans une première direction,

dans lequel la boîte (110, 120) génère, de la première force (F2), une force de serrage de la soupape ($F_K$) à un élément de réception de la soupape (150), et

dans lequel en arrivant à la seconde position, l'élément de génération d'une force d'arrêt (140) génère une seconde force (F3) dans l'espace de travail (114) dans une seconde direction qui maintient le corps creux (130) et l'élément de génération d'une force d'arrêt dans la seconde position.

**2.** Dispositif de couplage d'une soupape selon la revendication 1, **caractérisé par** un insert (112) disposé de manière mobile dans la boîte (110, 120) et ayant une cavité qui forme, avec une paroi intérieure de la boîte (110), l'espace de travail (114) de manière variable en hauteur et volume, et sur lequel également la première force (F2) agit.

**3.** Dispositif de couplage d'une soupape selon l'une quelconque des revendications précédentes, **caractérisé en ce que**

la boîte (110, 120) comprend au moins une première partie de la boîte (110) et une deuxième partie de la boîte (120), dans lequel

une partie inférieure de la première partie de la boîte (110) comprend un premier filetage mâle ou femelle et une partie supérieure de la deuxième partie de la boîte (120) comprend un filetage femelle ou mâle correspondant au premier filetage, et la première et la deuxième partie de la boîte (110, 120) sont vissables entre eux le long d'une longueur d'engrènement variable.

4. Dispositif de couplage d'une soupape selon l'une quelconque des revendications précédentes, **caractérisé en ce que** l'espace de travail (114) est rempli sans gaz d'un fluide incompressible, et le fluide est une huile hydraulique, une huile de graissage, ou une mixture de glycol à base d'eau.

5. Dispositif de couplage d'une soupape selon l'une quelconque des revendications précédentes, **caractérisé en ce que** le corps creux (130) comprend
une première extrémité à laquelle est disposé un raccord de tuyau pour le raccordement étanche au gaz et à la pression d'une conduite d'alimentation en gaz (300);
une deuxième extrémité à laquelle est disposé une surface de pression pour actionner une broche de soupape d'un valve (200) étant recevable a l'élément de réception de la soupape (150); et
et comprend, entre la première et la deuxième extrémité,
une première partie (130a) d'une première longueur et d'un premier diamètre (d1);
une deuxième partie (130b) d'une seconde longueur et d'un second diamètre qui est plus petit que le premier diamètre (d1); et
une troisième partie (130c) d'une troisième longueur et d'un troisième diamètre (d2) qui est plus petit que le premier diamètre (d1) et plus grand que le deuxième diamètre; dans lequel
la deuxième partie (130b) forme une réception pour l'élément de génération d'une force d'arrêt (140) sur le corps creux (130);
la première partie (130a) est dimensionné dans une longueur efficace de telle sorte que l'élément de génération d'une force d'arrêt (140) est, dans la première position, aménageable contre une paroi supérieure de l'espace de travail (114), et est,
dans la deuxième position, aménageable contre une paroi inférieure de l'espace de travail (114); et
la troisième partie (130c) est dimensionné dans une longueur efficace de telle sorte que, dans la deuxième position, la surface de pression de la broche de soupape est actionné pour ouvrir et/ou fermer le canal d'écoulement.

6. Dispositif de couplage d'une soupape selon l'une quelconque des revendications précédentes, **caractérisé par** un premier moyen d'étanchéité (118a), un deuxième moyen d'étanchéité (112b) et un troisième moyen d'étanchéité (112e), dans lequel
le premier moyen d'étanchéité (118a) est disposé dans un évidement (118) dans une paroi supérieure de la boîte (110) et étanche l'espace de travail (114) à une première partie (130a) du corps creux (130) contre l'extérieur du dispositif de couplage d'une soupape (100);
le deuxième moyen d'étanchéité (112b) est disposé dans un évidement (112b) sur une paroi intérieure d'un insert (112) dans la boîte (110, 120) et étanche l'espace de travail (114) à une troisième partie (130c) du corps creux (130) contre l'extérieur du dispositif de couplage d'une soupape (100); et
le troisième moyen d'étanchéité (112e) est disposé dans une partie de paroi (112d) de l'insert (112) et étanche l'espace de travail (114) à une paroi intérieure de la boîte (110) contre l'extérieur du dispositif de couplage d'une soupape (100).

7. Dispositif de couplage d'une soupape selon l'une quelconque des revendications précédentes, **caractérisé par** au moins une aperture (119, 119a) fermeable de manière étanche au gaz et au fluide dans une paroi supérieure de la boîte (110) à travers laquelle l'espace de travail (114) peut être rempli, vidé et/ou désaéré.

8. Dispositif de couplage d'une soupape selon l'une quelconque des revendications précédentes, **caractérisé en ce que** l'élément de réception d'une soupape (150) est un élément annulaire élastique, est disposé entre une surface extérieure inférieure d'un insert (112) et une surface intérieure inférieure de la boîte (120) comprenant une aperture correspondant à la forme annulaire de l'élément de réception de soupape (150), et est, à produire la force de serrage de la soupape ($F_K$), compressible au moyen d'un mouvement de coulissement de l'insert (112) et de la boîte (110, 120) l'un contre l'autre.

9. Dispositif de couplage d'une soupape selon l'une quelconque des revendications précédentes, **caractérisé en ce que** l'élément de génération d'une force d'arrêt (140) est un corps annulaire comprenant une partie de lèvre élastique (144) et une zone fixe (146), dans lequel ladite partie de lèvre (144) a une forme assiette dirigée à une surface inférieure de l'espace de travail (114) d'une façon telle que, dans la deuxième position la partie de lèvre (114) est déformable élastiquement pour que l'élément de génération d'une force d'arrêt (140) repose plan et, en aval, libre de fluide sur la surface inférieure de l'espace de travail (114).

Fig. 1

Fig. 2

L

Fig. 3

EP 2 609 355 B1

# Fig. 4

20

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1375994 A
- US 4345783 A